# EUROPEAN PATENT APPLICATION

(11) **EP 4 652 854 A1**
(43) Date of publication of application: **26.11.2025**
(21) Application number: 25173919.9
(22) Date of filing: 02.05.2025
(51) Int. Cl.: A23J 3/16, A23J 3/22, A23L 5/10, A23L 5/30, H05B 3/00, H05B 3/03, A23L 5/00

(54) **PROCESSING APPARATUS, METHOD OF MANUFACTURING FOOD PRODUCT, AND FOOD PRODUCT**

(30) Priority: 20.05.2024 JP 2024081460
(71) Applicant: Sodick Co., Ltd., Yokohama Kanagawa 224-8522 (JP)
(72) Inventor: NAKAMURA, Takahiro, Yokohama, 224-8522 (JP); NOGUCHI, Akinori, Yokohama, 224-8522 (JP); TAKANO, Jotaro, Yokohama, 224-8522 (JP)
(74) Representative: Becker, Eberhard

(57) **Abstract**

A processing apparatus (1) is capable of efficient processing in a short time and obtaining a processed food product with exemplary quality.

The processing apparatus (1) includes a processing unit (10) and a pair of electrodes (21, 22). The processing unit (10) is in a tubular shape, and an accommodation space (11) capable of accommodating a material to be processed is formed as an internal space thereof, and includes a heating unit (12). A heating space (11a) constituting a part of the accommodation space (11) is formed in the heating unit (12). The pair of electrodes (21, 22) are configured to clamp the material to be processed in the heating space (11a) for joule heating, and are configured to be movable from the heating space (11a) while clamping the material to be processed.

## Description

### BACKGROUND

### Technical Field

The disclosure relates to a processing apparatus, a method of manufacturing a food product, and a food product.

### Description of Related Art

Conventionally, techniques for heat processing food materials are known.

Patent Literature 1 (Japanese Patent No. 4313622) discloses an apparatus for manufacturing processed meat food products using joule heating. The manufacturing apparatus includes a joule heating part for heating meat raw materials and a picker that holds the meat raw materials. In the manufacturing apparatus, the picker holds the meat raw material and attaches the meat raw material to the joule heating part, and the joule heating part electrically heats the meat raw material. Subsequently, the picker is configured to remove the meat raw material from the joule heating part and transport the meat raw material to the next process.

However, with such a manufacturing apparatus, it was needed to hold, dispose, and remove the meat raw material for each of processes. For processing apparatuses targeting food ingredients and manufacturing methods using the same, there is a demand for apparatuses that can process more efficiently in a shorter time to minimize the loss of food color and flavor.

The disclosure provides a processing apparatus and a method of manufacturing a food product that can efficiently process in a short time and obtain a processed food product with exemplary quality.

### SUMMARY

According to the disclosure, the following aspects are provided.
[1] A processing apparatus includes a processing unit and a pair of electrodes. The processing unit is in a tubular shape, and an accommodation space capable of accommodating a material to be processed is formed as an internal space thereof, and includes a heating unit. The heating unit has a heating space formed as a part of the accommodation space. The pair of electrodes are configured to clamp the material to be processed in the heating space for joule heating, and are configured to be movable from the heating space while clamping the material to be processed.
[2] In the processing apparatus according to [1], the processing unit includes a cooling unit, the cooling unit has a cooling space formed as a part of the accommodation space, and the pair of electrodes are configured to be movable from the heating space to the cooling space while clamping the material to be processed.
[3] In the processing apparatus according to [2], the heating unit has a double cylinder structure, with an inner cylinder manufactured from heat-resistant plastic and an outer cylinder manufactured from metal, and the cooling unit is manufactured from metal and is configured such that refrigerant can circulate inside a sidewall.
[4] In the processing apparatus according to any one of [1] to [3], each of the pair of electrodes includes a sealing member, and the accommodation space surrounded by the processing unit and the pair of electrodes is sealed.
[5] The processing apparatus according to any one of [1] to [4] further includes a control part. The control part controls a voltage such that an alternating current flows between the pair of electrodes at which impedance of the material to be processed becomes minimum.
[6] The processing apparatus according to any one of [1] to [5] further includes a control part and a temperature sensor. The temperature sensor is configured to measure a temperature of the material to be processed in the accommodation space to acquire temperature data, and the control part controls the joule heating and the movement based on the temperature data.
[7] In the processing apparatus according to [6], the control part is configured to start the joule heating when the pair of electrodes clamp the material to be processed in the heating space, and is configured to stop the joule heating and move the pair of electrodes to a cooling space when the temperature data reaches a specified heating temperature, and the control part is configured to move the pair of electrodes outside the processing unit when the temperature data reaches a specified cooling temperature in the cooling space.
[8] A method of manufacturing a food product using the processing apparatus according to any one of [1] to [7] includes a clamping process and a heating process. In the clamping process, a protein-containing material is placed in the heating space and the protein-containing material is clamped by the pair of electrodes. In the heating process, after the protein-containing material clamped in the clamping process is electrically heated to a specified heating temperature, the protein-containing material is moved from the heating space while still being clamped.
[9] In the method of manufacturing a food product according to [8], the specified heating temperature is a temperature of 80 to 140°C.
[10] In the method of manufacturing a food product according to [8] or [9], the clamping process includes a vacuum processing process. In the vacuum processing process, vacuum processing is performed on the protein-containing material when the protein-containing material is clamped by the pair of electrodes.
[11] The method of manufacturing a food product according to any one of [8] to [10] further includes a cooling process. In the heating process, the protein-containing material is moved from the heating space to a cooling space that is a part of the accommodation space, and in the cooling process, the protein-containing material in the cooling space is cooled to a specified cooling temperature.
[12] In the method of manufacturing a food product according to [11], the specified cooling temperature is a temperature of 100°C or lower.
[13] The method of manufacturing a food product according to any one of [8] to [12] further includes a mixing process before the heating process. In the mixing process, water containing an electrolyte of a specified concentration is added to a dried protein-containing material and mixed under vacuum conditions to produce the protein-containing material.
[14] In the method of manufacturing a food product according to [13], in the mixing process, an enzyme is further added to the dried protein-containing material.
[15] The method of manufacturing a food product according to [14] further includes a preforming process after the mixing process and before the heating process. In the preforming process, after the protein-containing material is vacuum processed at a specified heat retention temperature, the protein-containing material is compressed for a specified time to produce the formed protein-containing material.
[16] In the method of manufacturing a food product according to [15], the specified heat retention temperature is a temperature of 35°C or higher and 55°C or lower.
[17] In the method of manufacturing a food product according to any one of [8] to [16], the protein-containing material is a meat substitute material.

### BRIEF DESCRIPTION OF THE DRAWINGS

FIG. 1 is a schematic perspective view of a processing apparatus 1 according to an embodiment of the disclosure.
FIG. 2 is a schematic vertical cross-sectional view through the center of the processing apparatus 1 of FIG. 1.
FIG. 3 is a block diagram showing a hardware configuration of a control means 40 according to an embodiment of the disclosure.
FIG. 4 is a block diagram showing a functional configuration of a control part 41 according to an embodiment of the disclosure.
FIG. 5 is a flowchart showing a method of manufacturing a food product according to an embodiment of the disclosure.
FIG. 6A, FIG. 6B, FIG. 6C, FIG. 6D, and FIG. 6E are schematic diagrams showing a method of manufacturing a food product according to an embodiment of the disclosure.

### DESCRIPTION OF THE EMBODIMENTS

According to the processing apparatus of the disclosure, an apparatus may be provided that is capable of efficiently processing a material to be processed in a short time and obtaining a processed food product of exemplary quality by clamping the material to be processed with electrodes for joule heating, and moving the material to be processed while keeping the material to be processed clamped with the electrodes.

The following describes embodiments of the disclosure. Various features shown in the embodiments below can be combined with each other. Also, aspects can be established independently for each of the features. Furthermore, elements not defined in the scope of patent claims among the following embodiments are optional elements and can be omitted. In the numerical values disclosed in the following description, any number (for example, one or two) of "0"s may be added to the end. For example, "1.4" may be made into "1.40" or "1.400" by adding one or two "0"s after "1.4".

A processing apparatus 1 according to an embodiment of the disclosure is an apparatus for converting a material to be processed, which is a food material, into a processed food product of exemplary quality by joule heating processing. In this specification, exemplary quality refers to the color and flavor of the processed food product not being impaired, the processed food product having no damage, and/or the texture of the processed food product being close to meat. First, the material to be processed that is the target of processing will be described.

### 1. Material to be processed

The material to be processed handled in the processing apparatus 1 and the method of manufacturing a food product according to an embodiment of the disclosure is any food material containing protein (hereinafter, a protein-containing material P). The protein-containing material P specifically refers to a material in which the protein content in the protein-containing material P is 1 mass% or more, preferably 10 mass% or more, more preferably 30 mass% or more, and even more preferably 50 mass% or more. The protein content in the protein-containing material P is, for example, 1 to 100 mass%, specifically for example, 1, 5, 10, 15, 20, 25, 30, 35, 40, 45, 50, 55, 60, 65, 70, 75, 80, 85, 90, 95, 100 mass%, and may be within a range between any two of the numerical values exemplified here, or may be equal to or greater than any of the numerical values exemplified here.

As will be described in detail later, in the method of manufacturing a food product according to an embodiment of the disclosure, an aqueous solution containing electrolytes such as salts is added to a dried protein-containing material of any shape and mixed to produce the protein-containing material P. In this specification, the protein-containing material P before adding and mixing the aqueous solution containing electrolytes is referred to as the dried protein-containing material. Then, the protein-containing material P is electrically heated. In this way, the dried protein-containing material can be reshaped and converted into a material having a moist and soft texture. Therefore, the effect of the disclosure is more pronounced when using materials that are poor in processing characteristics such as water solubility and binding properties as the dried protein-containing material.

The water content of the dried protein-containing material is 50 mass% or less, preferably 30 mass% or less, more preferably 20 mass% or less. The water content of the dried protein-containing material may be substantially 0. The water content of the dried protein-containing material is, for example, 0 to 50 mass%, specifically for example, 0, 1, 5, 10, 15, 20, 25, 30, 35, 40, 45, 50 mass%, and may be within a range between any two of the numerical values exemplified here, or may be equal to or less than any of the numerical values exemplified here.

An example of the dried protein-containing material is a meat substitute material. In recent years, with the increase in protein demand due to world population growth and meat consumption, the development of materials manufactured from plant-derived proteins as meat alternatives has become active.

Such meat substitute materials often use defatted soybeans as raw materials. Generally, defatted soybeans lose processing characteristics such as water solubility and binding properties due to heat treatment and organic solvent treatment during the defatting process. Therefore, materials that have been converted into puffed dried materials by extrusion processing, which allows for rehydration softening, flavoring, and other processing, are distributed in the market.

However, meat substitute materials still have issues such as inferior texture compared to meat, difficulty in manufacturing in various sizes (especially large shapes), and requiring time and effort for cooking and processing. By manufacturing a food product using the processing apparatus 1, such meat substitute materials can be converted into a food product with an integrated moist texture.

The dried protein-containing material may be dried foods such as jerky or dried squid, in addition to meat substitute materials. These can also be converted into a food product with an integrated moist texture through the method of manufacturing a food product using the processing apparatus 1.

### 2. Processing apparatus 1

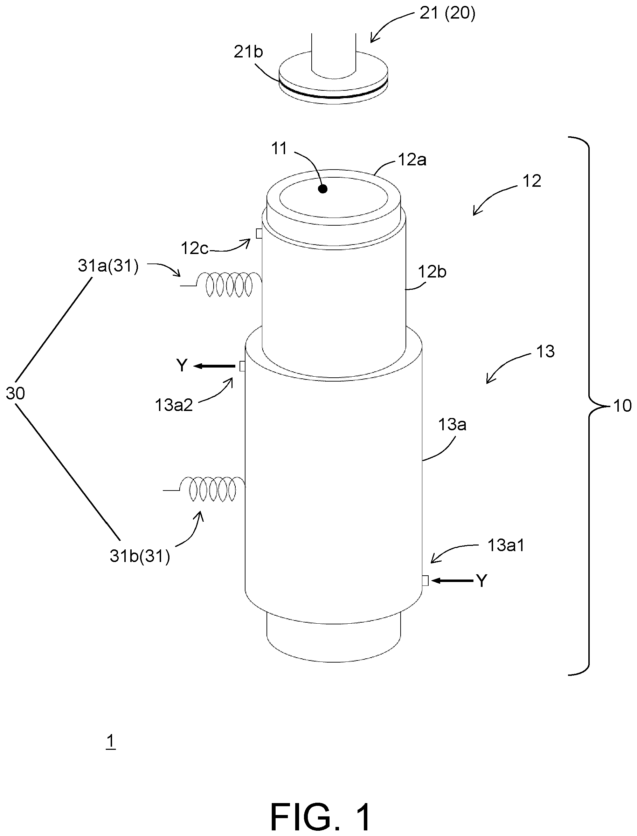

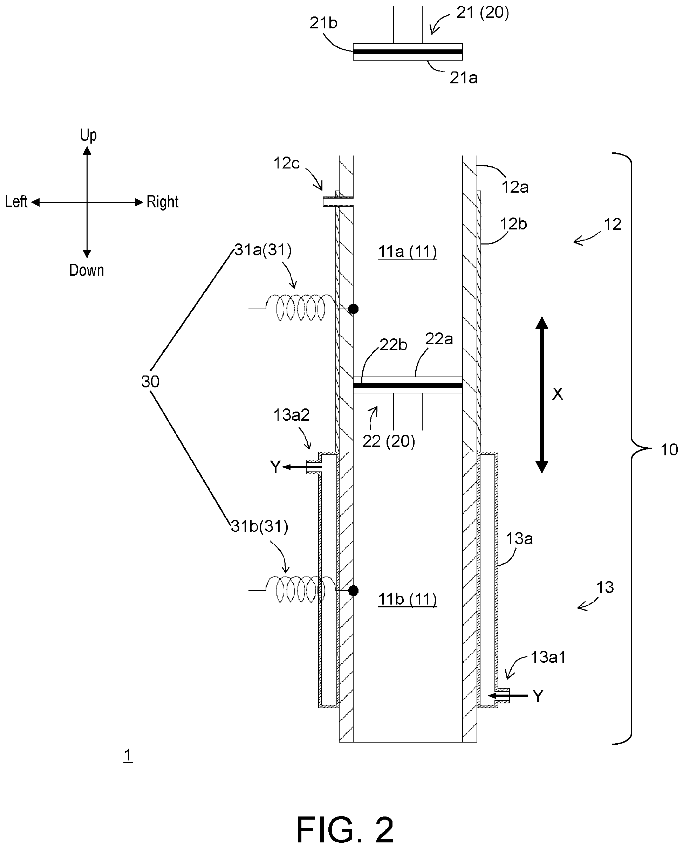

Here, the processing apparatus 1 will be described using FIG. 1 to FIG. 4. The processing apparatus 1 includes a processing unit 10, an electrode unit 20, a sensor part 30, and a control means 40. In the following description, an up-down direction and a left-right direction are defined as shown in FIG. 2. The up-down direction specifically refers to a movable direction (arrow X) of an upper electrode 21 and a lower electrode 22.

### 2.1 Processing unit 10

The processing unit 10 is for storing the material to be processed and performing various processing treatments. As shown in FIG. 1, the processing unit 10 is configured in a tubular shape. The processing unit 10 has an accommodation space 11 formed as an internal space of the tube that can accommodate the material to be processed (FIG. 2). In the illustrated example, the processing unit 10 is in a cylindrical shape. The processing unit 10 includes a heating unit 12 and a cooling unit 13, which are coaxially connected in the up-down direction.

### 2.1.1 Heating unit 12

The heating unit 12 provides a space for heating the material to be processed using the upper electrode 21 and the lower electrode 22 described later. As shown in FIG. 2, the heating unit 12 has a heating space 11a formed as a part of the accommodation space 11. In other words, the heating unit 12 is also configured in a tubular shape.

The heating unit 12 is preferably made of a material that has a small thermal expansion coefficient, pressure resistance at high temperatures, low thermal conductivity, and exemplary electrical insulation properties. By making the heating unit 12 from such material, the heating unit 12 can withstand the saturated steam pressure generated by joule heating of the material to be processed, and can prevent electrical leakage that may occur during joule heating of the material to be processed. The heating unit 12 is made of, for example, heat-resistant plastic such as high performance engineering plastics. Specifically, the heating unit 12 is made of, for example, PolyEtherEtherKetone (PEEK).

The heating unit 12 is preferably a double cylinder structure. In this case, an inner cylinder 12a is manufactured from heat-resistant plastic material as described above. An outer cylinder 12b is manufactured from a material with exemplary strength such as metal. Normally, the pressure generated in the heating space 11a by joule heating acts isotropically, but depending on the shape of the material to be processed, stress may concentrate in some areas. Therefore, by covering the heat-resistant plastic with metal, the strength of the heating unit 12 can be enhanced, and materials to be processed with more diverse shapes may be safely processed.

In addition, a vacuum hole 12c is formed in the heating unit 12, and the heating unit 12 may include a vacuum drive part (not shown). In the example of FIG. 2, the vacuum hole 12c is formed in the side surface of the heating unit 12. The vacuum hole 12c is formed penetrating through the inner cylinder 12a and the outer cylinder 12b. The heating unit 12 is configured so that the vacuum drive part can perform vacuum processing inside the heating space 11a from outside the heating unit 12 through the vacuum hole 12c.

The vacuum hole 12c can be provided at any location as long as the material to be processed may be subject to vacuum processing before joule heating. The vacuum drive part can use any component as long as the component can perform vacuum processing as described above. The vacuum drive part is, for example, a vacuum pump. The vacuum drive part is controlled by a vacuum processing control part 41d.

### 2.1.2 Cooling unit 13

The cooling unit 13 has a function of cooling the material to be processed. As shown in FIG. 2, the cooling unit 13 is connected to the heating unit 12 in the up-down direction, and the cooling unit 13 has a cooling space 11b formed as a part of the accommodation space 11. In other words, the cooling unit 13 is also configured in a tubular shape.

The cooling unit 13 is preferably made of a material with high thermal conductivity. By making the cooling unit 13 from such material, the material to be processed can be efficiently cooled. The cooling unit 13 is, for example, made of metal. Specifically, the cooling unit 13 is made of, for example, SUS304.

In addition, the cooling unit 13 is configured so that refrigerant can circulate inside the sidewall thereof. Specifically, the cooling unit 13 has a jacket structure. That is, a jacket part 13a is configured so that refrigerant can circulate. With this configuration in which refrigerant circulates, the material to be processed may be cooled in the cooling space 11b more efficiently.

Any medium can be used as the refrigerant, for example, the refrigerant may be cold water. The refrigerant can be circulated using any cooling drive part (not shown) through a refrigerant inlet 13a1 and a refrigerant outlet 13a2 formed in the jacket part 13a. In the examples of FIG. 1 and FIG. 2, the refrigerant inlet 13a1 is provided on the lower side surface of the jacket part 13a, and the refrigerant outlet 13a2 is provided on the upper side surface of the jacket part 13a on the opposite side of the refrigerant inlet 13a1, but the refrigerant inlet 13a1 and the refrigerant outlet 13a2 can be provided at any location. In FIG. 1 and FIG. 2, an arrow Y indicates the flow path of the refrigerant.

### 2.2 Electrode unit 20

The electrode unit 20 includes an upper electrode 21 and a lower electrode 22 as a pair of electrodes, a power supply part (not shown), and an electrode drive part (not shown). The upper electrode 21 and the lower electrode 22 are configured to clamp the material to be processed in the heating space 11a and perform joule heating.

Highly conductive substances can be rapidly and uniformly heated by using joule heating. As will be described later in detail, in the embodiment, at the time when the material to be processed is heated in the processing apparatus 1, the material to be processed has high conductivity because an aqueous solution containing electrolytes is mixed therewith. Therefore, by using the upper electrode 21 and the lower electrode 22 to electrically heat the material to be processed, the temperature may be uniformly raised in a short time.

The power supply part includes an electronic circuit that can supply an alternating current to the electrodes and can measure the impedance of the material to be processed that is clamped by the electrodes. The power supply part can have any configuration as long as the power supply part has such functions. By using an alternating current, the components of the material to be processed may be prevented from separating during joule heating. The power supply part is configured to be capable of supplying an alternating current of up to 10kHz according to a command from a voltage control part 41b.

In addition, the upper electrode 21 and the lower electrode 22 are configured to be movable from the heating space 11a while clamping the material to be processed. Specifically, the upper electrode 21 and the lower electrode 22 are configured to be movable from the heating space 11a to outside the processing unit 10 or to the cooling space 11b. In the embodiment, the upper electrode 21 and the lower electrode 22 are each configured to move in the direction of the arrow X. Specifically, each of the electrodes is disposed to be aligned in the up-down direction, and by means of the electrode drive part, the electrodes are configured to be movable in the up-down direction respectively from above the processing unit 10 through the accommodation space 11 to below the processing unit 10.

The electrode drive part can have any configuration as long as the electrode drive part can provide power for the upper electrode 21 and the lower electrode 22 to move as described above. The electrode drive part may be, for example, an air cylinder. The electrode drive part moves the upper electrode 21 and the lower electrode 22 respectively according to a command from a movement control part 41c.

With the above configuration, the material to be processed may be placed between the electrodes by spacing the upper electrode 21 and the lower electrode 22 apart, or the material to be processed may be clamped by narrowing the spacing. Also, with the above configuration, the material to be processed may be moved to the cooling unit 13 while being kept clamped, and furthermore, the material to be processed may be moved from the cooling unit 13 to outside the processing unit 10 while being kept clamped.

The upper electrode 21 and the lower electrode 22 are preferably configured to function as the upper surface and bottom surface, respectively, of the accommodation space 11 that is surrounded by the upper electrode 21, the lower electrode 22, and the processing unit 10. That is, the outer periphery of each of the upper electrode 21 and the lower electrode 22 is preferably configured such that almost no gap is created with the inner wall of the processing unit 10 when the upper electrode 21 and the lower electrode 22 are disposed in the accommodation space 11.

Specifically, a clamping surface 21a and a clamping surface 22a of the upper electrode 21 and the lower electrode 22 that respectively contact the material to be processed are preferably shaped to correspond to the shape of the cross-section of the accommodation space 11 perpendicular to the direction of movement (arrow X) of the upper electrode 21 and the lower electrode 22. In the illustrated example, since the cross-section of the accommodation space 11 perpendicular to the arrow X is circular, each of the electrodes is also formed in a circular shape to cover the cross-section of the accommodation space 11. With such a configuration, the lower electrode 22 can function as a bottom surface to place and hold the material to be processed in the heating space 11a, and then by adjusting the positions of the upper electrode 21 and the lower electrode 22, the material to be processed can be securely clamped.

The upper electrode 21 and the lower electrode 22 include a sealing member 21b and a sealing member 22b, respectively, around the outer peripheries thereof. The accommodation space 11 surrounded by the inner wall of the processing unit 10, the upper electrode 21, and the lower electrode 22 is sealed by the sealing member 21b and the sealing member 22b. With such a configuration, the material to be processed can be appropriately vacuum processed through the vacuum hole 12c. Also, during joule heating, the material to be processed may be heated without the contained moisture escaping.

The clamping surface 21a and the clamping surface 22a of the upper electrode 21 and the lower electrode 22 that respectively contact the material to be processed are preferably provided with fine embossing. With such a configuration, the material to be processed can be more securely clamped.

Since the material to be processed is a food material, the electrodes need to be manufactured from materials approved by the Food Sanitation Act. Therefore, the material of the electrodes is preferably titanium, for example.

### 2.3 Sensor part 30

The sensor part 30 includes a temperature sensor 31 and a pressure sensor (not shown). The temperature sensor 31 is configured to measure the temperature of the material to be processed in the accommodation space 11 and to acquire temperature data. Any existing temperature sensor can be used as the temperature sensor 31. For example, the temperature sensor 31 may be a non-grounded sheath thermocouple.

The temperature sensor 31 can be provided at any location as long as the temperature sensor 31 can measure the temperature of the material to be processed during heating/cooling processing. In the illustrated example, the temperature sensor 31 is provided on the inner wall of the heating unit 12 and the inner wall of the cooling unit 13, respectively (hereinafter, the temperature sensor 31 provided in the heating unit 12 will be referred to as a heating temperature sensor 31a, and the temperature sensor 31 provided in the cooling unit 13 will be referred to as a cooling temperature sensor 31b). That is, the heating temperature sensor 31a can measure the surface temperature of the material to be processed when being disposed in the heating space 11a, and the cooling temperature sensor 31b can measure the surface temperature of the material to be processed when being disposed in the cooling space 11b**.**

According to the principle of joule heating, the material to be processed can be heated almost uniformly. Also, since the heating unit 12 is composed of a material with low thermal conductivity, heat dissipation from the surface of the material to be processed is minimal, and the temperature difference with the center part is extremely small. Therefore, with a configuration capable of acquiring temperature data of the surface temperature of the material to be processed, the temperature of the material to be processed can be measured with sufficient accuracy.

The pressure sensor is configured to acquire pressure data. The pressure data specifically includes the atmospheric pressure inside the processing unit 10, and the surface pressure between the upper electrode 21 and the lower electrode 22. Any sensor can be used as long as the sensor can acquire such pressure data, and the sensor can be provided at any location.

### 2.4 Control means 40

### 2.4.1 Hardware configuration of control means 40

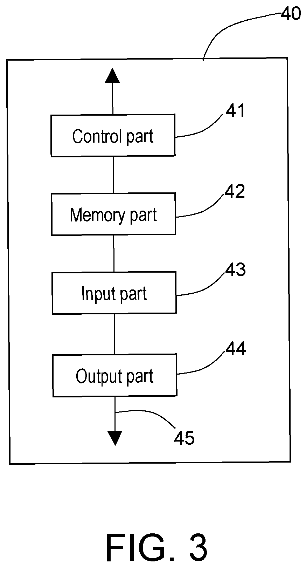

As shown in FIG. 3, the control means 40 includes a control part 41, a memory part 42, and an input part 43. The control means 40 may further include an output part 44. A communication bus 45 interconnects the control part 41, the memory part 42, the input part 43, and the output part 44. The communication bus 45 also connects the control means 40 with the processing unit 10, the electrode unit 20, and the sensor part 30.

### (1) Control part 41

Various functions executed by the control part 41 may be implemented by software (including so-called applications) or may be implemented by hardware.

In the case of implementation by software, various functions can be realized by a processor executing a program constituting the software. For example, the processor may be a central processing unit (CPU), a microprocessor, a digital signal processor (DSP), etc.

On the other hand, in the case of implementation by hardware, various functions can be realized by various circuits such as an Application Specific Integrated Circuit (ASIC), a System On a Chip (SOC), a Field Programmable Gate Array (FPGA), or a Dynamically Reconfigurable Processor (DRP).

### (2) Memory part 42

A portion of the memory part 42 is composed of, for example, Random Access Memory (RAM) or Dynamic Random Access Memory (DRAM), etc., and is used as a work area during the execution of various program-based processing by the control part 41.

Also, a portion of the memory part 42 is, for example, a non-volatile memory such as Read Only Memory (ROM) or Hard Disk Drive (HDD), etc., and stores various data and programs used for processing by the control part 41. The memory part 42 is capable of maintaining a database including one or more tables for recording various information and processing results.

The memory part 42 stores various parameters used when the processing apparatus 1 operates. For example, various values such as the frequency of the alternating current used for joule heating, temperature, pressure, etc., may be stored.

The programs stored in the memory part 42 are, for example, an Operating System (OS) for realizing the basic functions of the control means 40, drivers for controlling various hardware, programs for realizing various functions, etc., and include programs used for processing by the control means 40.

### (3) Input part 43

The input part 43 can include one or multiple of, for example, a keyboard, keypad, mouse, microphone, touch screen, buttons, etc. The input part 43 accepts input of various information from a user using the processing apparatus 1. The information includes, for example, instructions for starting/ending processing in the processing apparatus 1, and specified temperature for processing, frequency, specified processing time, etc.

### (4) Output part 44

The output part 44 can output information such as the current temperature and pressure of the material to be processed, and the frequency of the alternating current used for joule heating. The output part 44 is, for example, any display and/or speaker.

### 2.4.2 Functional configuration of control means 40

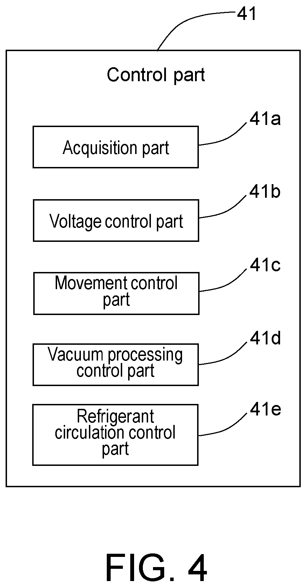

As shown in FIG. 4, the control part 41 includes, as a functional configuration, an acquisition part 41a, a voltage control part 41b, a movement control part 41c, a vacuum processing control part 41d, and a refrigerant circulation control part 41e.

### (1) Acquisition part 41a

The acquisition part 41a can acquire temperature data from the temperature sensor 31, pressure data from the pressure sensor, and various parameters accepted by the input part 43.

### (2) Voltage control part 41b

The voltage control part 41b can control joule heating through the power supply part. The content controlled by the voltage control part 41b includes, for example, starting and ending joule heating based on temperature data and an electrode position, determining the frequency of the alternating current to be supplied, and adjusting a voltage. Specifically, the voltage control part 41b is configured to start joule heating when the upper electrode 21 and the lower electrode 22 clamp the material to be processed in the heating space 11a, and is configured to stop joule heating when the temperature data reaches the specified heating temperature. Also, the voltage control part 41b is configured to execute frequency scanning and determine the frequency at which the impedance of the material to be processed becomes practically minimal. Furthermore, the voltage control part 41b is configured to control the voltage so that an alternating current with a specified frequency or an alternating current that minimizes the impedance of the material to be processed flows between the upper electrode 21 and the lower electrode 22.

### (3) Movement control part 41c

The movement control part 41c can control the movement of the electrodes through the electrode drive part. The content controlled by the movement control part 41c is, for example, the movement of the upper electrode 21 and the lower electrode 22 based on temperature data, pressure data, and joule heating status. Specifically, for example, the movement control part 41c is configured to start lowering the upper electrode 21 when the material to be processed is introduced into the processing unit 10, and to stop the descent when the upper electrode 21 is positioned directly above the vacuum hole 12c. Also, the movement control part 41c is configured to move the upper electrode 21 and the lower electrode 22 to clamp the material to be processed based on pressure data. Furthermore, the movement control part 41c is configured to move the pair of electrodes to the cooling space 11b while keeping the material to be processed clamped when joule heating stops. The movement control part 41c is configured to move the upper electrode 21 and the lower electrode 22 out of the processing unit 10 based on temperature data in the cooling space 11b.

### (4) Vacuum processing control part 41d

The vacuum processing control part 41d can control the vacuum drive part. Specifically, for example, the vacuum processing control part 41d is configured to drive the vacuum drive part to perform vacuum processing when the upper electrode 21 stops directly above the vacuum hole 12c.

### (5) Refrigerant circulation control part 41e

The refrigerant circulation control part 41e can control the cooling drive part. Specifically, for example, the refrigerant circulation control part 41e is configured to circulate refrigerant in the jacket part 13a when processing in the processing unit 10 begins. Alternatively, for example, the refrigerant circulation control part 41e is configured to circulate refrigerant at the point when the material to be processed is moved to the cooling unit 13.

### 3. Method of manufacturing a food product

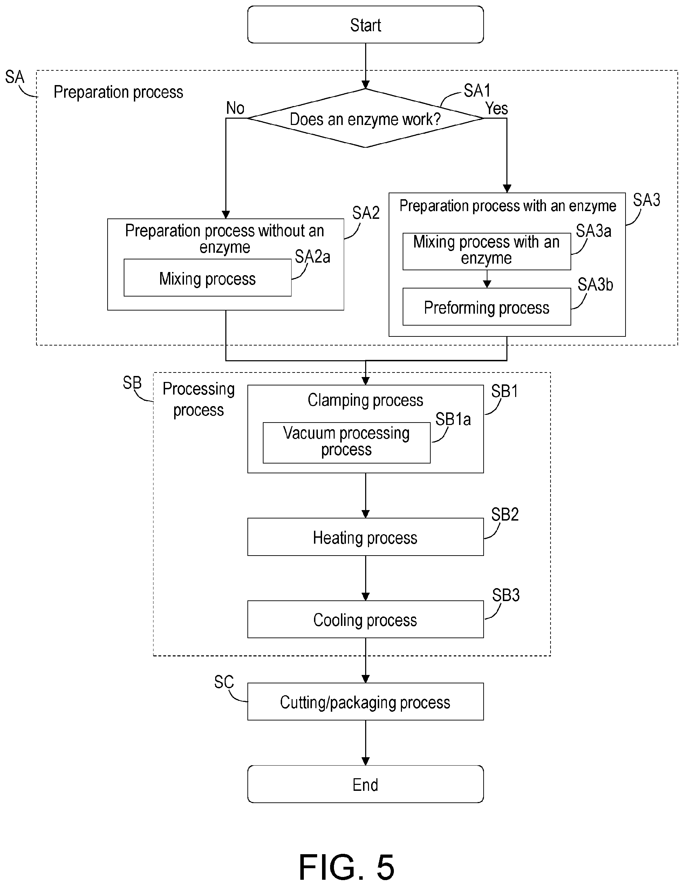

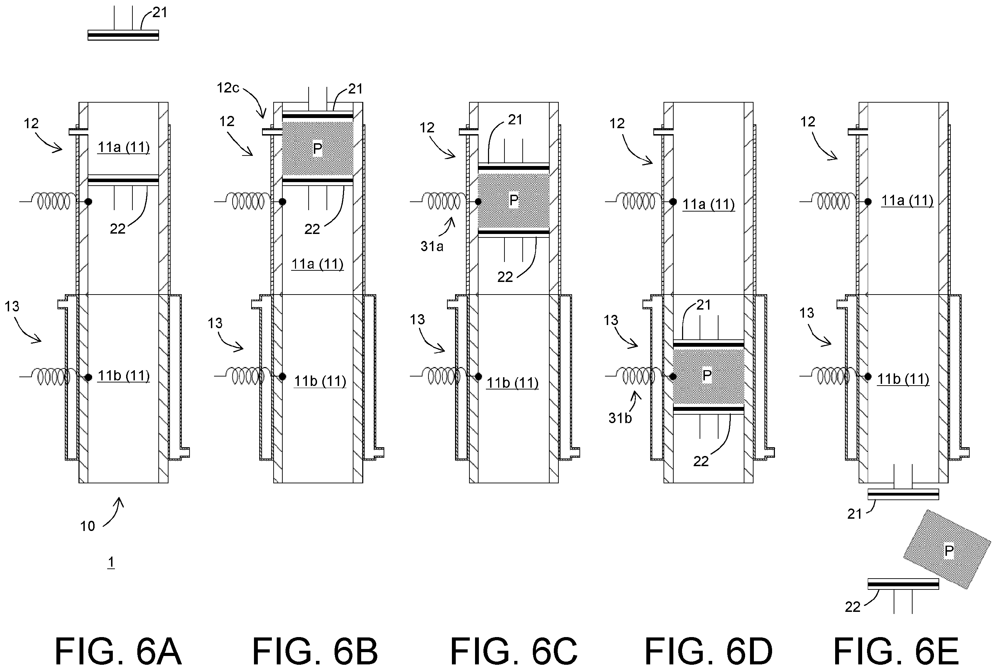

Next, each of processes in a method of manufacturing a food product using the processing apparatus 1 will be described using FIG. 5 and FIG. 6A to FIG. 6E. The manufacturing method includes a processing process SB. The manufacturing method can further include a preparation process SA and a cutting/packaging process SC. In the manufacturing method, the preparation process SA, processing process SB, and cutting/packaging process SC are performed in order. The preparation process SA and cutting/packaging process SC are performed outside the processing apparatus 1, and the processing process SB is performed using the processing apparatus 1.

### 3.1 Preparation process SA

The preparation process SA is a process in which the protein-containing material P to be introduced into the processing apparatus 1 is prepared. In the preparation process SA, the process differs depending on whether an enzyme act on the dried protein-containing material to be processed (branching SA1 in FIG. 4).

When using the dried protein-containing material composed of proteins that are affected by an enzyme, protein cross-linking reactions can be induced by adding an enzyme. However, depending on the type of protein, the effect of an enzyme may not be expected. Therefore, in cases where the effect of an enzyme cannot be expected, a preparation process SA2 without an enzyme is performed, and in cases where the effect of an enzyme can be expected, a preparation process SA3 with an enzyme is performed. Also, the enzyme used is, for example, transglutaminase.

### 3.1.1 Preparation process SA2 without an enzyme

The preparation process SA2 without an enzyme includes a mixing process SA2a in which the protein-containing material P is manufactured by adding water containing electrolytes of a specified concentration to the dried protein-containing material and mixing under vacuum conditions.

In the mixing process SA2a, first, water containing electrolytes of a specified concentration is added to the dried protein-containing material. The electrolyte may be, for example, salts. In the case where the electrolyte is table salt, the specified concentration of the aqueous solution is preferably 20-50 mmol/L. Specifically, for example, the specified concentration is 20, 25, 30, 35, 40, 45, 50 mmol/L, and may be within a range between any two of the numerical values exemplified here. By adding an aqueous solution of such concentration to the dried protein-containing material, the saltiness can be adjusted. In the mixing process SA2a, other substances may be further added according to taste adjustment or the intended use of the food material to be manufactured.

In the mixing process SA2a, the amount of water added is adjusted so that the moisture content of the protein-containing material P becomes a specified amount. The specified moisture content is, for example, 40-75 mass%. Preferably, the specified moisture content is 50-60 mass%. The specified moisture content is specifically, for example, 40, 45, 50, 55, 60, 65, 70, 75 mass%, and may be within a range between any two of the numerical values exemplified here. By manufacturing the protein-containing material P with such moisture content, the moisture content becomes equivalent to the moisture content of meat, and a food product with exemplary texture can be manufactured. Also, the dried protein-containing material may be prevented from becoming unable to retain moisture due to excessive water addition.

In the mixing process SA2a, after adding the aqueous solution to the dried protein-containing material, the protein-containing material P is manufactured by mixing under vacuum conditions. For the vacuum conditions, mild decompression is sufficient because excessive decompression may cause the moisture in the container to evaporate or decrease. The gauge pressure in this case is, for example, -70 to -90 kPa at room temperature of about 25°C. The gauge pressure is specifically, for example, -70, -72, -74, -76, -78, -80, -82, -84, -86, -88, -90 kPa, and may be within a range between any two of the numerical values exemplified here.

Specifically, for example, in the mixing process SA2a, stirring and mixing is performed for about 5 minutes under mild vacuum conditions using a water-sealed pump and a vacuum mixer. By mixing under vacuum conditions, the independent air bubbles inside the dried protein-containing material burst and become continuous air bubbles. This allows the aqueous solution to penetrate quickly and uniformly into the dried protein-containing material.

When the mixing process SA2a is completed, the preparation process SA2 without an enzyme also ends, and the process proceeds to the processing process SB.

### 3.1.2 Preparation process SA3 with an enzyme

The preparation process SA3 with an enzyme includes a mixing process SA2a and a preforming process SA3b. Hereinafter, the mixing process SA2a in the preparation process SA3 with an enzyme is referred to as a mixing process SA3a with an enzyme. Regarding the mixing process SA3a with an enzyme, the differences from the mixing process SA2a will be described.

### (1) Mixing process SA3a with an enzyme

In the mixing process SA3a with an enzyme, mixing is performed after further adding an enzyme to the dried protein-containing material. The enzyme is added in an amount such that the content of the enzyme relative to the mass of the dried protein-containing material becomes 0.01-5 mass%. Preferably, the enzyme is added in an amount such that the content thereof becomes 0.01-2 mass%. Specifically, for example, the enzyme content is 0.01, 0.05, 0.1, 0.5, 1, 2, 3, 4, 5 mass%, and the amount added may be within a range between any two of the numerical values exemplified here, or equal to or less than any of the numerical values exemplified here.

Also, the temperature during stirring and mixing in the mixing process SA3a with an enzyme is preferably 25°C or lower, for example, preferably 15-25°C. The temperature during stirring and mixing is specifically, for example, 15, 16, 17, 18, 19, 20, 21, 22, 23, 24, 25°C, and may be within a range between any two of the numerical values exemplified here, or equal to or lower than any of the numerical values exemplified here. If the temperature is too low, the enzyme does not easily act on the dried protein-containing material. On the other hand, if the temperature is too high, the enzyme completes reaction thereof before being sufficiently mixed with the dried protein-containing material, losing activity thereof, and the effect of the enzyme is unable to be obtained uniformly throughout the dried protein-containing material. Therefore, the temperature during stirring and mixing is preferably within the above range.

### (2) Preforming process SA3b

After the mixing process SA3a with an enzyme, the preforming process SA3b is performed. In the preforming process SA3b, the protein-containing material P is vacuum processed at a specified heat retention temperature, and then the protein-containing material P is compressed for a specified time to manufacture the formed protein-containing material P.

The preforming process SA3b is performed using any mold capable of heat retention and vacuum processing of the protein-containing material P. For example, an upper mold and a lower mold with degassing holes formed can be used as the mold. Also, the shape of the mold can be appropriately selected according to the desired shape. In the preforming process SA3b, first, the protein-containing material P is filled into the mold. Then, the inside of the mold is vacuum processed and degassed through the degassing hole provided in the upper mold, and further, the upper mold is lowered toward the lower mold to compress the protein-containing material P. At this time, the inside of the mold is maintained at a specified heat retention temperature.

The specified heat retention temperature is 35-55°C. The specified heat retention temperature is preferably 40-50°C. The specified heat retention temperature is specifically, for example, 35, 40, 45, 50, 55°C, and may be within a range between any two of the numerical values exemplified here. The enzyme has a fast reaction rate and low thermal stability, but by performing the processing at the specified heat retention temperature within the above range, a sufficient amount of activity can be obtained in a short time.

When the vacuum processing is completed, the upper mold is lowered at atmospheric pressure to perform compression for a specified time. Here, further mechanical compression may be performed. The specified time is, for example, 1-5 minutes, and preferably 2 minutes. The specified time is specifically, for example, 1, 2, 3, 4, 5 minutes, and may be within a range between any two of the numerical values exemplified here. When the compression is completed, the formed protein-containing material P is removed from the upper mold and the lower mold, and the preforming process SA3b is completed. When the preforming process SA3b is completed, the process proceeds to the processing process SB.

In the preforming process SA3b, a protein cross-linking reaction by an enzyme is caused in the protein-containing material P. Therefore, by performing the preforming process SA3b, a more easily integrated food product can be manufactured.

### 3.2 Processing process SB

The processing process SB is a process in which the protein-containing material P manufactured in the preparation process SA is processed using the processing apparatus 1. The processing process SB includes a clamping process SB1 and a heating process SB2. The processing process SB can further include a cooling process SB3, and the processing process SB is performed in the order of the clamping process SB1, the heating process SB2, and the cooling process SB3. In the processing process SB, before starting the clamping process SB1, a user can input various information to the input part 43. At the start of the processing process SB, the processing apparatus 1 is in a state where, as shown in FIG. 6A, the upper electrode 21 is positioned above the processing unit 10, and the lower electrode 22 is positioned inside the heating unit 12. This state is referred to as the initial state.

### (1) Clamping process SB1

In the clamping process SB1, the protein-containing material P is placed into the heating space 11a, and the protein-containing material P is clamped between the upper electrode 21 and the lower electrode 22.

First, the user places the protein-containing material P into the heating space 11a. If the preforming process SA3b has not been performed, an amount of protein-containing material P corresponding to the desired size is placed into the heating space 11a. After that, the user starts the operation of the processing apparatus 1 by inputting an instruction to start processing to the input part 43.

Next, the movement control part 41c controls the electrode drive part to move the upper electrode 21 and the lower electrode 22. Specifically, inside the heating unit 12, the upper electrode 21 and the lower electrode 22 are moved to a position at which the protein-containing material P can be clamped between the upper electrode 21 and the lower electrode 22 (FIG. 6B). Depending on the amount of the protein-containing material P placed in the heating unit 12, the upper electrode 21 and the lower electrode 22 may be configured so that merely the upper electrode 21 moves downward while the lower electrode 22 remains fixed.

When the upper electrode 21 and the lower electrode 22 begin to contact the protein-containing material P, based on pressure data acquired from the pressure sensor, the upper electrode 21 and the lower electrode 22 are moved so that the pressure applied to the protein-containing material P becomes a specified surface pressure, thereby compressing the protein-containing material P. The specified surface pressure is specifically 0.5 MPa or less, and preferably 0.3 MPa or less. The specified surface pressure is, for example, 0.1~0.5 MPa, specifically for example, 0.1, 0.2, 0.3, 0.4, 0.5 MPa, and may be within a range between any two of the numerical values exemplified here. When the pressure applied to the protein-containing material P reaches the specified surface pressure, the movement of the upper electrode 21 and the lower electrode 22 stops.

Additionally, the clamping process SB1 can include a vacuum processing process SB1a. In the vacuum processing process SB1a, vacuum processing is performed on the protein-containing material P while the protein-containing material P is clamped between the upper electrode 21 and the lower electrode 22. However, if the preparation process SA3 with an enzyme has been performed, the vacuum processing process SB1a may be omitted.

In the case where the vacuum processing process SB1a is performed, when the protein-containing material P is clamped, the upper electrode 21 is moved to stop at a position directly above the vacuum hole 12c in the heating unit 12 (FIG. 6B).

Specifically, in the vacuum processing process SB1a, when the upper electrode 21 and the lower electrode 22 begin to contact the protein-containing material P, the vacuum processing control part 41d controls the vacuum drive part to perform vacuum processing. The vacuum processing is performed until the space surrounded by the upper electrode 21 and the lower electrode 22 reaches a specified decompression level based on pressure data acquired from the pressure sensor.

The specified decompression level, in gauge pressure, is, for example, -70~-90 kPa at room temperature of about 25°C. The specified decompression level is specifically, for example, -70, -72, -74, -76, -78, -80, -82, -84, -86, -88, -90 kPa, and may be within a range between any two of the numerical values exemplified here. When the specified decompression level is reached, the vacuum processing stops, thereby completing the vacuum processing process SB1a. By performing the vacuum processing process SB1a, the materials of the protein-containing material P adhere closely to each other, enabling more uniform joule heating.

After the clamping process SB1 (and the vacuum processing process SB1a) is completed, the process proceeds to the heating process SB2.

### (1) Heating process SB2

In the heating process SB2, after the protein-containing material P clamped in the clamping process SB1 is electrically heated to a specified heating temperature, the protein-containing material P is moved from the heating space 11a while remaining clamped. In the heating process SB2, the position of the protein-containing material P may be adjusted within the heating unit 12 before the protein-containing material P is electrically heated. For example, depending on the disposition of the heating temperature sensor 31a, the position of the protein-containing material P can be adjusted by the upper electrode 21 and the lower electrode 22 (FIG. 6B to FIG. 6C).

In the heating process SB2, the voltage control part 41b controls the power supply part to start joule heating using an alternating current of a specified frequency. For the specified frequency, commercial frequencies of 50Hz or 60Hz can be used. Also, for the specified frequency, a frequency at which the impedance of the protein-containing material P becomes minimum may be used. In this case, the specified frequency can be determined by the voltage control part 41b executing a frequency scan before starting the joule heating.

The joule heating is performed until the temperature of the protein-containing material P reaches a specified heating temperature based on temperature data acquired from the heating temperature sensor 31a. The specified heating temperature is preferably 80°C or higher. In the case of performing the preparation process SA3 with an enzyme, by heating to the above temperature range, the enzyme is thermally inactivated, making the material edible.

Also, the specified heating temperature is preferably a temperature equal to or higher than a glass transition point Tg of the protein. Protein begins to plasticize at temperatures equal to or higher than the glass transition point Tg, and adjacent proteins thermally fuse together. Through thermal fusion of proteins, the strength of the protein-containing material P can be further increased, and the texture can be further changed. Especially in the case of performing the preparation process SA2 without an enzyme, it is preferable to heat to a temperature equal to or higher than the glass transition point Tg to obtain an integrally formed food product. In this case, the specified heating temperature is specifically 110°C or higher.

On the other hand, heating protein to excessively high temperatures may cause hydrolysis. Also, protein may undergo thermal decomposition when heated to temperatures exceeding 140°C. Therefore, the specified heating temperature is preferably 140°C or lower.

From the above, the specified heating temperature is preferably 80 to 140°C. The specified heating temperature is specifically, for example, 80, 85, 90, 95, 100, 105, 110, 115, 120, 125, 130, 135, 140°C, and may be within a range between any two of the numerical values exemplified here.

When the protein-containing material P is heated to the specified heating temperature by joule heating, the voltage control part 41b stops the joule heating. Alternatively, the voltage control part 41b may be configured to stop the joule heating after maintaining the specified heating temperature for a specified processing time. For example, if the manufactured food product is to be distributed as a retort food product, the protein-containing material P is kept at 120°C for about 4 minutes, or at 130°C for about 30 seconds.

When the joule heating is stopped, the protein-containing material P is then moved from the heating space 11a while still being clamped. That is, the movement control part 41c controls the electrode drive part to move the upper electrode 21 and the lower electrode 22 while maintaining the gap or surface pressure between the upper electrode 21 and the lower electrode 22. By moving the protein-containing material P while the protein-containing material P remains clamped between the upper electrode 21 and the lower electrode 22, the protein-containing material P can be efficiently transported while maintaining the shape thereof.

Specifically, the protein-containing material P is moved to the cooling space 11b (FIG. 6C to FIG. 6D). That is, the movement control part 41c moves the upper electrode 21 and the lower electrode 22 downward to positions at which the upper electrode 21 and the lower electrode 22 are respectively disposed within the cooling space 11b. When the movement of the protein-containing material P to the cooling space 11b is completed, the heating process SB2 ends, and the process proceeds to the cooling process SB3.

Note that the cooling process SB3 may be omitted if unneeded. In this case, the movement control part 41c controls the upper electrode 21 and the lower electrode 22 to move the protein-containing material P from the heating space 11a to outside the processing unit 10. For example, as shown in FIG. 6E, the upper electrode 21 and the lower electrode 22 are moved downward until the upper electrode 21 is positioned below the lower end of the cooling unit 13, and the gap between the upper electrode 21 and the lower electrode 22 is widened to release the protein-containing material P from the clamped state. By this operation, the protein-containing material P can be removed from the processing apparatus 1. When the protein-containing material P is removed from the processing apparatus 1, the heating process SB2 ends, and the processing process SB also ends.

### (2) Cooling process SB3

In the cooling process SB3, the protein-containing material P in the cooling space 11b is cooled to a specified cooling temperature. The specified cooling temperature is a temperature of 100°C or lower. The specified cooling temperature is, for example, 10 to 100°C, and preferably 70 to 100°C. The specified cooling temperature is specifically, for example, 10, 20, 30, 40, 50, 60, 70, 75, 80, 85, 90, 95, 100°C, and may be within a range between any two of the numerical values exemplified here.

When the specified heating temperature exceeds 100°C, the heated protein-containing material P has soft surface properties and high internal water vapor pressure. In this case, if the protein-containing material P is removed as is after the heating process SB2, the protein-containing material P may be damaged. Therefore, it is preferable that the specified cooling temperature is within the above range.

In the cooling process SB3, the refrigerant circulation control part 41e controls the cooling drive part to circulate the refrigerant, thereby performing cooling. The refrigerant may be configured to be circulated at least at the start of the cooling process SB3, and the refrigerant circulation can be started at any timing.

For example, the refrigerant circulation may be configured to start when the operation of the processing apparatus 1 starts, or may be configured to start when the protein-containing material P is moved to the cooling space 11b. Also, the refrigerant circulation may be configured to stop when the cooling process SB3 ends, or may be configured to stop when all processes in the method of manufacturing a food product end.

When the temperature data acquired from the cooling temperature sensor 31b reaches the specified cooling temperature, the movement control part 41c controls the upper electrode 21 and the lower electrode 22 to move the protein-containing material P outside the processing unit 10 (FIG. 6D to FIG. 6E). The procedure for removing the protein-containing material P from the processing unit 10 is the same as in the case where the processing process SB is ended without performing the cooling process SB3 described above. When the cooling process SB3 ends, the processing process SB also ends.

When the processing process SB ends, the process proceeds to the cutting/packaging process SC. Also, if there is remaining protein-containing material P that needs processing, the processing apparatus 1 is returned to the initial state, and the processing process SB is performed again (FIG. 6A).

### 3.3 Cutting/packaging process SC

In the cutting/packaging process SC, the protein-containing material P taken out from the processing unit 10 is cut to a desired size. Any existing slicer can be used for cutting. Then, the protein-containing material P cut to the desired size is transported to a packaging machine, and the protein-containing material P is packaged. This completes the cutting/packaging process SC, and the method of manufacturing a food product ends.

### 4. Effects

The processing apparatus 1 according to the embodiment has a configuration in which the material to be processed can be moved while being clamped between the upper electrode 21 and the lower electrode 22. Therefore, since the upper electrode 21 and the lower electrode 22 that perform heat processing also have the function of transporting, processing can be performed efficiently in a short time.

In the processing apparatus 1 according to the embodiment, since the material to be processed is clamped between the upper electrode 21 and the lower electrode 22, high-temperature joule heating is performed under pressure and in an anaerobic state. Therefore, the material to be processed can be processed uniformly in a short time without impairing the color tone or flavor.

The heating means in the processing apparatus 1 according to the embodiment is joule heating. With joule heating, temperature rise control is easy, and preheating is unneeded. Also, heating in the processing apparatus 1 is performed inside the heating unit 12 composed of a material with low thermal conductivity, so heat dissipation is minimal. With such a configuration, power costs can be reduced.

The manufacturing of the processing apparatus 1 according to the embodiment does not require special parts or materials. Also, the processing unit 10, which is the main component of the processing apparatus 1, has a relatively simple configuration in which the heating unit 12 and the cooling unit 13 are connected. Therefore, the processing apparatus 1 may be manufactured at low cost and with ease, making it easy to introduce the processing apparatus 1 in the food manufacturing industry.

In the method of manufacturing a food product according to the embodiment, an aqueous solution containing electrolytes is added to a dried protein-containing material, vacuum processing is performed, and heat processing is performed. With such a configuration, the material to be processed can be reshaped, and the quality can be converted to a moist and soft texture. Also, this allows for uniform seasoning of the material to be processed.

In the method of manufacturing a food product according to the embodiment, the preforming process SA3b is performed. In this case, by introducing the formed material to be processed into the processing unit 10, a food product can be manufactured more quickly.

### 5. Other embodiments

The disclosure may also be implemented in the following aspects.
▪ In the processing apparatus 1, the heating unit 12 and the cooling unit 13 may be disposed connected in the left-right direction, and the pair of electrodes may also be configured to be movable in the left-right direction. In other words, this is a configuration in which the above-described processing apparatus 1 is rotated 90 degrees.
▪ In the processing apparatus 1, not only the upper electrode 21 and the lower electrode 22, but also the processing unit 10 may be configured to be movable. For example, in a configuration where the heating unit 12 and the cooling unit 13 are connected in the up-down direction, when the material to be processed is moved from the heating unit 12 to the cooling unit 13, the processing unit 10 may be configured to move upward while the upper electrode 21 and the lower electrode 22 remain fixed. Description of Reference Numerals

1: processing apparatus
10: processing unit
11: accommodation space
11a: heating space
11b: cooling space
12: heating unit
12a: inner cylinder
12b: outer cylinder
12c: vacuum hole
13: cooling unit
13a: jacket part
13a1: refrigerant inlet
13a2: refrigerant outlet
20: electrode unit
21: upper electrode
21a: clamping surface
21b: sealing member
22: lower electrode
22a: clamping surface
22b: sealing member
30: sensor part
31: temperature sensor
31a: heating temperature sensor
31b: cooling temperature sensor
40: control means
41: control part
41a: acquisition part
41b: voltage control part
41c: movement control part
41d: vacuum processing control part
41e: refrigerant circulation control part
42: memory part
43: input part
44: output part
45: communication bus
P: protein-containing material
SA: preparation process
SA1: branching
SA2: preparation process
SA2a: mixing process
SA3: preparation process
SA3a: mixing process
SA3b: preforming process
SB: processing process
SB1: clamping process
SB1a: vacuum processing process
SB2: heating process
SB3: cooling process
SC: cutting/packaging process

## Claims

1. A processing apparatus (1), comprising:
a processing unit (10) and a pair of electrodes (21, 22),
the processing unit (10) being in a tubular shape, comprising an accommodation space (11) formed as an internal space thereof that is capable of accommodating a material to be processed, and comprising a heating unit (12),
a heating space (11a) constituting a part of the accommodation space (11) being formed in the heating unit (12), and
the pair of electrodes (21, 22) being configured to clamp the material to be processed in the heating space (11a) for joule heating, and being configured to be movable from the heating space (11a) while maintaining a state of clamping the material to be processed.

2. The processing apparatus (1) according to claim 1, wherein
the pair of electrodes (21, 22) have a shape corresponding to a shape of a cross-section of the accommodation space (11) perpendicular to a direction in which the pair of electrodes (21, 22) move, and
the pair of electrodes (21, 22) are disposed side by side in the direction in which the pair of electrodes (21, 22) move.

3. The processing apparatus (1) according to claim 2, wherein
the material to be processed is a food material.

4. The processing apparatus (1) according to claim 1, wherein
the processing unit (10) comprises a cooling unit (13),
a cooling space (11b) constituting a part of the accommodation space (11) is formed in the cooling unit (13), and
the pair of electrodes (21, 22) are configured to be movable from the heating space (11a) to the cooling space (11b) while clamping the material to be processed.

5. The processing apparatus (1) according to claim 4, wherein
the heating unit (12) has a double cylinder structure, with an inner cylinder (12a) manufactured from heat-resistant plastic and an outer cylinder (12b) manufactured from metal, and
the cooling unit (13) is manufactured from metal and is configured to allow refrigerant to circulate inside a sidewall.

6. The processing apparatus (1) according to claim 1, wherein
each of the pair of electrodes (21, 22) comprises a sealing member (21b, 22b), and
the accommodation space (11) surrounded by the processing unit (10) and the pair of electrodes (21, 22) is sealed.

7. The processing apparatus (1) according to claim 1,
further comprising a control part (41), and
the control part (41) controlling a voltage so that an alternating current flows between the pair of electrodes (21, 22) at which impedance of the material to be processed becomes minimum.

8. The processing apparatus (1) according to claim 1,
further comprising a control part (41) and a temperature sensor (31),
the temperature sensor (31) being configured to measure a temperature of the material to be processed in the accommodation space (11) to acquire temperature data, and
the control part (41) controlling the joule heating and the movement based on the temperature data.

9. The processing apparatus (1) according to claim 8, wherein
the control part (41) is configured to start the joule heating when the pair of electrodes (21, 22) clamp the material to be processed in the heating space (11a) and is configured to stop the joule heating and move the pair of electrodes (21, 22) to a cooling space (11b) when the temperature data reaches a specified heating temperature, and
the control part (41) is configured to move the pair of electrodes (21, 22) outside the processing unit (10) when the temperature data reaches a specified cooling temperature in the cooling space (11b).

10. A method of manufacturing a food product using the processing apparatus (1) according to claim 1, comprising:
a clamping process (SB1) and a heating process (SB2),
in the clamping process (SB1), a protein-containing material (P) being placed in the heating space (11a) and clamped by the pair of electrodes (21, 22), and
in the heating process (SB2), the protein-containing material (P) clamped in the clamping process (SB1) being electrically heated to a specified heating temperature, and then the protein-containing material (P) being moved from the heating space (11a) while still being clamped.

11. The method of manufacturing a food product according to claim 10, wherein
the specified heating temperature is a temperature of 80 to 140°C.

12. The method of manufacturing a food product according to claim 10, wherein
the clamping process (SB1) comprises a vacuum processing process (SB1a), and
in the vacuum processing process (SB1a), vacuum processing is performed on the protein-containing material (P) when the protein-containing material (P) is clamped by the pair of electrodes (21, 22).

13. The method of manufacturing a food product according to claim 10,
further comprising a cooling process (SB3),
in the heating process (SB2), the protein-containing material (P) being moved from the heating space (11a) to a cooling space (11b) that is a part of the accommodation space (11), and
in the cooling process (SB3), the protein-containing material (P) in the cooling space (11b) being cooled to a specified cooling temperature.

14. The method of manufacturing a food product according to claim 13, wherein
the specified cooling temperature is a temperature of 100°C or lower.

15. The method of manufacturing a food product according to claim 10,
further comprising a mixing process (SA2a) before the heating process (SB2), and
in the mixing process (SA2a), water containing an electrolyte of a specified concentration being added to a dried protein-containing material and mixed under vacuum conditions to produce the protein-containing material (P).

16. The method of manufacturing a food product according to claim 15, wherein
in the mixing process (SA3a), an enzyme is further added to the dried protein-containing material.

17. The method of manufacturing a food product according to claim 16,
further comprising a preforming process (SA3b) after the mixing process (SA3a) and before the heating process (SB2), and
in the preforming process (SA3b), the protein-containing material (P) being vacuum processed at a specified heat retention temperature and then compressed for a specified time to produce the protein-containing material (P) formed.

18. The method of manufacturing a food product according to claim 17, wherein
the specified heat retention temperature is a temperature of 35 to 55°C.

19. The method of manufacturing a food product according to claim 10, wherein
the protein-containing material (P) is a meat substitute material.

20. A food product, manufactured by the method of manufacturing a food product according to claim 10.
